# EUROPEAN PATENT SPECIFICATION

(11) **EP 0 583 816 B1**
(45) Date of publication and mention of the grant of the patent: **03.09.1997**
(21) Application number: 93202167.8
(22) Date of filing: 14.07.1993
(51) Int. Cl.: B66C 13/06, G01B 7/30

(54) **A method for determining the inclination angle of a rope, and an anti-swing device for controlling this angle in a lifting apparatus**
Verfahren zur Neigungswinkelbestimmung eines Seils und Vorrichtung zum Verhindern von Pendelschwingungen durch das Regeln dieses Winkels in einer Hebeeinrichtung
Procédé pour déterminer l'angle de l'inclinaison d'un câble, et un appareil pour prévenir des oscillations pendulaires par réglage de cet angle dans un appareil élévateur

(30) Priority: 04.08.1992 IT MI921922
(43) Date of publication of application: 23.02.1994
(73) Proprietor: FINMECCANICA S.p.A. AZIENDA ANSALDO, I-16128 Genova (IT)
(72) Inventor: Parenti, Riccardo, I-16132 Genova (IT); Penno, Carla, I-16149 Genova (IT); Rotondo, Giovanni, I-16159 Genova (IT)
(74) Representative: Perani, Aurelio

(56) References cited:
- EP-A- 0 120 136
- WO-A-86/02341
- DE-A- 1 806 281
- DE-A- 3 005 461
- DE-A- 4 011 260
- DE-B- 1 041 669
- FR-A- 2 005 453
- US-A- 4 997 095

## Description

The present invention relates to a method for determining an angle between a rope of a lifting apparatus and a predetermined reference direction, during general loads handling, said lifting apparatus being of the type comprising at least one pair of guides mounted on a support structure, a trolley provided with a plurality of support elements which slide on the guides, a winch mounted on the trolley and to which the rope is associated.

It should be specified that in the present description and in the attached Claims, the term "rope" is intended to mean a general flexible element that could consist of a cable, a chain, or any other similar element, to which a load to be lifted by a crane or by other similar lifting apparatuses in general, is attached.

It is well known that loads handling operations by means of lifting apparatuses provided with ropes are always somewhat complex and difficult to control owing to the dangerous swinging that the suspended load may undergo during the various manoeuvres.

In particular, when these operations take place in the open air, for example on the quays of ports or in the yards of industrial plannts, in addition to the swinging caused by stops and other various movements of the loads, there is also the swinging caused by environmental factors, and, in particular, by the wind.

At present, in many cases, the safety of manoeuvres for handling loads with cranes of any type, for example gantry cranes, tower cranes or bridge cranes, depends on the experience and skill of the operators who carry out the manoeuvres; in fact, the latter drive the various moving parts according to their own sensitivity, by means of the controls provided in the cab, which is generally on the crane's support structure. It will be appreciated that the presence of the human factor cannot always be considered as a sufficient guarantee for handling operations of goods, especially if it is considered that in some cases cranes or lifting apparatuses in general are provided with ropes being several tens of metres long, and have to move objects weighing several tons. As a consequence, so-called anti-swing devices have been developed for safer and more reliable operation of the lifting apparatuses, that is to say devices which can regulate the operation of the lifting apparatuses and limit the swinging of the load autonomously: these devices regulate mainly the speed to which the load is displaced, in accordance with the above-described angle of inclination of the rope with a predetermined direction, and in relationship with the weight of the load to be lifted.

These devices substantially comprise means for measuring the aforementioned angle of inclination and sensors which determine the position of the movable parts of the lifting apparatus relatively to fixed reference points, such as for example those between which the load is to be moved. These anti-swing devices also include a conventional control system that controls the above described measuring means and sensors, and which coordinates the functions of the latter.

However, known anti-swing devices have certain disadvantages which limit their reliability and performance; in particular, the means by which the aforementioned angle of inclination of the rope is measured are not entirely reliable.

In some cases, for example, these measuring means consist of suitably positioned optical sensors, which receive a light beam and in response measure the angle to be evaluated; however if the ambient conditions when the lifting apparatus operates are not perfect, for example as a result of unfavourable weather conditions with rain, mist and the like, or more generally if for any reason the reception of the light beam is not ideal, the entire control system cannot operate as it should, thus rendering useless the entire anti-swing device.

In other cases, the means of measuring the angle of the rope consist of instruments known as inclinometers, which use a predetermined small size mass disposed in their interior in order to perform the measurement; however, also these instruments are not satisfactory as well, since the mass gives rise to dynamical problems when the measurements are taken, associated with its presence in the instrument.

The object of the present invention is to provide a method for determining the angle of inclination of a rope of a lifting apparatus relatively to a predetermined reference direction during load handling, having functional and structural characteristics which overcome the disadvantages described above with reference to the prior art.

This object is achieved by means of a method; the steps thereof are characterised in the first of the attached Claims.

The invention also comprises an anti-swing device which is characterised in Claims 4-6.

Further characteristics and advantages of the invention will become apparent from an embodiment of the method according thereto, provided by way of non-limiting example, with reference to the attached drawings, in which:
- Figure 1 is a perspective view of a lifting apparatus suitable for carrying out the method according to the invention;
- Figure 2 is a front view of the lifting apparatus in Figure 1;
- Figure 3 is a schematic representation of a detail of the lifting apparatus in Figure 1.

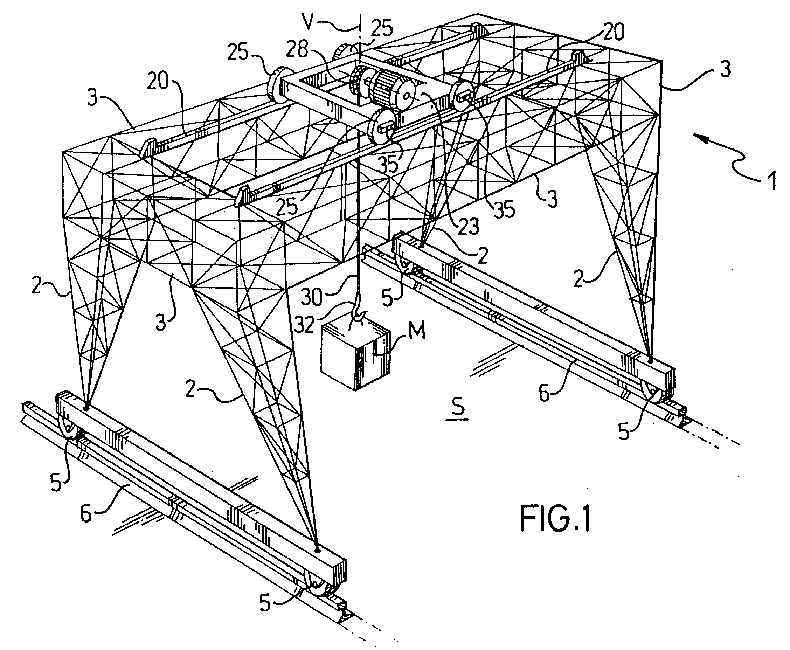

With reference to these Figures and in particular to Figure 1, generally indicated as 1 is a crane of the so-called gantry type, used to lift and move general loads M resting on the ground S; this crane has a general support structure in the form of a conventional gantry, which rests on the ground and in this example has a lattice form.

This support structure has four uprights 2 and a cross apparatus 3 which extends between the latter; the uprights 2 are each provided on their lower end with wheels 5 which are guided on tracks 6 attached to the ground S.

On the cross apparatus 3 is a pair of linear guides 20 parallel with one another and extending longitudinally relatively to the cross apparatus 3; a trolley 23, which moves the loads and is provided with four bearings 25 which roll along the guides 20, is movable along these guides 20.

A winch 28, also attached to the carriage 23, has a metal lifting rope 30 provided, at its free end, with means 32 for engaging loads to be lifted; in this example these means consist of a simple hook.

At each of the four bearings 25, the trolley 23 is provided with sensor means 35 for detecting the forces which act on the bearings; the purpose of these sensor means and their operation will become clearer from the following description; additionally, according to a preferred embodiment, these sensor means 35 are of the conventional type and, in this case, are known commercially as load cells.

The crane 1 includes an anti-swing device 40 shown schematically in block diagram in Figure 3, comprising the load cells 35 and some elements for controlling the operation of the crane; these elements are position sensors 42, a module 43 for the angle determination, a regulator block 45, means 47 for activating the crane, which include conventional electrical or other type motors for moving the trolley, and means for braking the latter.

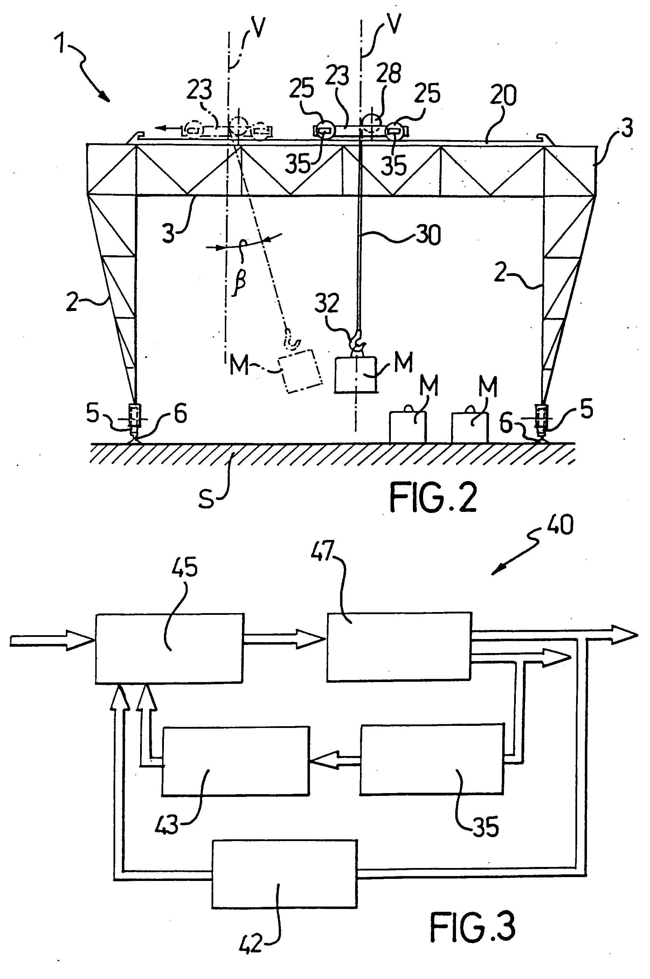

With reference to the above-described crane 1, the method according to the invention for determining an angle of inclination β of the cable 30 relative to a predetermined vertical direction V, is described hereinafter with reference to an operating state of the crane in which the trolley 23 moves from an initial stop state, in the direction indicated by the arrow and shown by a dotted line in Figure 2.

The inertia caused by the presence of a load M to be moved, displaces the rope 30 from the vertical V of the angle β; the latter depends on various physical and structural parameters of the system, including: positive or negative acceleration in the transient starting and stopping phases of the carriage, the speed of the latter, the various friction forces which occur, the length and modulus of elasticity of the cable, and all the parameters which can be evaluated case by case according to the various design details which constitute the lifting apparatus.

In general these parameters give rise that, by means of the tension transmitted by the rope 30, the weight of the load M is distributed on the support points of the trolley 23 on the guides 20, i.e. in this case the bearings 25, in a manner correlated with the width of the angle of inclination β of the rope.

Said weight distribution is measured by the load cells 35 which are located for this purpose at the bearings 25; with reference to Figure 3 it can be seen that the load cells 35 transmit a signal corresponding to the measured force as input to the module 43 for determining the angles.

The latter processes the data provided by the load cells 35 and, as will be explained in greater detail hereinafter, performs the correlation between the forces and the angle of inclination β of the rope, thereby subsequently supplying the evaluation of the angle calculated as input to the regulator block 45.

The regulator block 45 also receives the information supplied by the position sensors 42 concerning the operating position in which the various moving parts of the crane, in this case the carriage 23 and the gantry structure along the rails 6, for example, are disposed.

The regulator block 45 then compares the information supplied by the module 43 and by the sensors 42 with reference to information supplied to it by the general control system of the crane; in accordance with the comparison made, the regulator block 45 automatically processes and transmits the commands necessary for making the crane drive means 47 operate in such a way that the load M to be moved is prevented from swinging.

It should be noted that in the present invention, the comparison of the forces measured in the support points of the carriage 23 with the angle of inclination β of the cable, enables the angle to be determined quickly and accurately, by means of simple methods, without the disadvantages previously described with reference to the known art.

Indeed, the aforementioned forces can be measured by means of simple, reliable, and nowadays quite accurate instruments. It should be noted in fact that the above-described load cells are already used in other technical sectors, and can measure accurately forces of even several tons. Furthermore, the determination of the angle of inclination is carried out in accordance with a physical parameter, the forces, which indicates accurately the current conditions of operation of the crane; this parameter can be measured in real time, directly, rather than deduced from the information supplied by other instruments.

A further, obvious advantage obtained by the invention is that it allows an anti-swing device to be made wherein for controlling the swinging of the load, it is no longer necessary to know the width of the angle β but it is just sufficient to know the forces which act on the bearings since, once the correlation associating the forces with the angle β has been established, the changes to be made to the operating conditions of the lifting apparatus in order to prevent the load from swinging, can be directly provided.

The correlation between the angle of inclination β of the rope and the forces on the bearings, which, as already stated, depends on the type of crane and on all the various parts which constitute it, can easily be carried out not only experimentally, i.e by measuring the values of the main parameters of the crane during testing and under various operating conditions thereby obtaining data, tables and graphs which can be used in real operating conditions, but also theoretically, for example by elaborating apropriate calculation models.

In view of the relative simplicity of the system: load-mass-rope-trolley, these models can provide accurate and reliable results, and additionally have the advantage that they can easily be processed by means of simulation on computers. This last advantage permits to carry out a simple, complete project engineering of the lifting apparatuses, which includes all the possible working conditions, since it allows the designer to simulate the effects of the wind and of other random elements.

Advantageously, in addition, the load cells provided in order to carry out the method according to the invention, may also be used when preliminary measuring of the weight of a load to be moved is being performed, in order to establish whether this weight is greater than the safety limit of the crane; in fact in static conditions, that is with the carriage at a standstill and the rope supporting the load aligned with the vertical V, if the latter passes through the centre of gravity of the trolley, the forces on the four bearings are identical, and their sum is equal to the weight of the load. The positioning of the load cells at the points of support of the carriage thus permits an additional function, which is useful in controlling the lifting apparatus.

It will be appreciated that the embodiment according to the present invention, as described above, may have variants in which some characteristics can be adapted according to different conditions of operation.

In fact by way of example, according to the description given initially, it is obvious that the rope 30 can be replaced by any equivalent flexible element, but, additionally, a lifting apparatus could be used wherein not only a single length of rope to which the load is attached should be provided, but a burton is employed in which the rope slides in a series of pulleys.

Furthermore, the trolley can also be modified, for example, the number and/or type of support elements on the guides could be varied; in fact the bearings could easily be replaced by slides or optionally other means for eliminating sliding friction of the trolley support points along the guides.

Finally, the aforementioned load cells can also be replaced by other means, obviously provided that the latter can perform the same force-measuring functions.

## Claims

1. A method for determining an angle (β) formed between a rope (30) of a lifting apparatus (1) and a predetermined reference direction (V), during general loads handling, said lifting apparatus being of the type comprising at least one pair of guides (20) mounted on a support structure (2, 3), a trolley (23) provided with a plurality of support elements (25) which slide on the guides, a winch (28) mounted on the trolley and to which the aforementioned rope (30) is associated, comprising the following steps:
- establishing a correlation between the angle (β) and the forces caused by the moved load and which act on the sliding support elements (25) of the trolley (23),
- measuring said forces,
- deriving the angle (β) from the correlation established, by using the forces measured.

2. A method for determining an angle β according to Claim 1, characterised in that the correlation between the angle (β) and the forces which act on the sliding support elements (25) is established by means of experimental tests.

3. A method for determining an angle (β) according to Claim 1, characterised in that the correlation between the angle (β) and the forces which act on the sliding support elements (25) is established by means of a calculation model of the lifting apparatus.

4. An anti-swing device for a lifting apparatus, which comprises at least one pair of guides (20) mounted on a support structure (2, 3), a trolley (23) provided with a plurality of support elements (25) which slide on the guides, and a winch (28) mounted on the trolley to which a rope (30) is associated for loads (M) in general, characterised in that it comprises means (35) for measuring the forces which are caused by the moved load (M) and which act on the sliding support elements (25), said means (35) being located at each of said sliding support elements (25), and being able to provide informations on the value of the measured forces to a processor module (43) which correlates said forces with an angle (β) between the rope (30) and a predetermined reference direction (V), a plurality of position sensors (42) for detecting the operating condition of the lifting apparatus, a regulator block (45) which processes data provided as input thereto by the sensors (42) and by the processor module (43), and which transmits operating commands to drive means (47) of the lifting apparatus.

5. A device according to Claim 4, characterised in that the means (35) for measuring the forces are load cells.

6. A device according to Claim 5, characterised in that the sliding support elements (25) are bearings.

## Patentansprüche

1. Ein Verfahren zum Bestimmen eines Winkels (β), der zwischen einem Seil (30) einer Hebevorrichtung (1) und einer vorbestimmten Referenzrichtung (V) gebildet ist, während einer allgemeinen Lastenhandhabung, wobei die Hebevorrichtung von dem Typ ist, der zumindest ein Paar von Führungen (20), die auf einer Trägerstruktur (2, 3) befestigt sind, einen Förderwagen (23), der mit einer Mehrzahl von Trägerelementen (25) versehen ist, die auf den Führungen gleiten, und ein Hebezeug (28) aufweist, das an dem Förderwagen befestigt ist, und dem das vorher erwähnte Seil (30) zugeordnet ist, mit folgenden Schritten:
Errichten einer Korrelation zwischen dem Winkel (β) und den Kräften, die durch die bewegte Last bewirkt werden, und die auf die gleitenden Trägerelemente (25) des Förderwagens (23) wirken;
Messen der Kräfte;
Ableiten des Winkels (β) aus der errichteten Korrelation durch Verwenden der gemessenen Kräfte.

2. Ein Verfahren zum Bestimmen eines Winkels (β) gemäß Anspruch 1, dadurch gekennzeichnet, daß die Korrelation zwischen dem Winkel (β) und den Kräften, die auf die gleitenden Trägerelemente (25) wirken, mittels experimenteller Tests errichtet wird.

3. Ein Verfahren zum Bestimmen eines Winkels (β) gemäß Anspruch 1, dadurch gekennzeichnet, daß die Korrelation zwischen dem Winkel (β) und den Kräften, die auf die gleitenden Trägerelemente (25) wirken, mittels eines Berechnungsmodells der Hebevorrichtung errichtet wird.

4. Ein Anti-Schaukel-Gerät für eine Hebevorrichtung, welches zumindest ein Paar von Führungen (20), die an einer Trägerstruktur (2, 3) befestigt sind, einen Förderwagen (23), der mit einer Mehrzahl von Trägerelementen (25) versehen ist, die auf den Führungen gleiten, und ein Hebezeug (28) aufweist, das an dem Förderwagen befestigt ist, dem ein Seil (30) für Lasten (M) im allgemeinen zugeordnet ist, dadurch gekennzeichnet, daß dasselbe eine Einrichtung (35) zum Messen der Kräfte, welche durch die bewegte Last (M) bewirkt werden, und welche auf die gleitenden Trägerelemente (25) wirken, wobei die Einrichtung (35) an jedem der gleitenden Trägerelemente (25) positioniert und in der Lage ist, Informationen bezüglich des Werts der gemessenen Kräfte zu einem Prozessormodul (43) zu liefern, welches die Kräfte mit einem Winkel (β) zwischen dem Seil (30) und einer vorbestimmten Referenzrichtung (V) korreliert, eine Mehrzahl von Positionssensoren (42) zum Erfassen der Betriebsbedingung der Hebevorrichtung und einen Reglerblock (45) aufweist, welcher Daten verarbeitet, die von den Sensoren (42) und von dem Prozessormodul (43) als Eingabe in denselben geliefert werden, und welcher Betriebsbefehle zu der Antriebseinrichtung (27) der Hebevorrichtung überträgt.

5. Ein Gerät gemäß Anspruch 4, dadurch gekennzeichnet, daß die Einrichtung (35) zum Messen der Kräfte Lastzellen sind.

6. Ein Gerät gemäß Anspruch 5, dadurch gekennzeichnet, daß die gleitenden Trägerelemente (25) Lager sind.

## Revendications

1. Procédé pour déterminer un angle (β) formé entre un câble (30) d'un appareil de levage (1) et une direction de référence prédéterminée (V) durant une manutention générale de charges, ledit appareil de levage étant du type comportant au moins une paire de guides (20) montée sur une structure (2, 3) de support, un chariot (23) pourvu de plusieurs éléments (25) de support qui glissent sur les guides, un treuil (28) monté sur le chariot et auquel le câble précité (30) est associé, comprenant les étapes suivantes :
- on établit une corrélation entre l'angle (β) et les forces provoquées par la charge déplacée et qui agissent sur les éléments glissants (25) de support du chariot (23),
- on mesure lesdites forces,
- on déduit l'angle (β) de la corrélation établie en utilisant les forces mesurées.

2. Procédé pour déterminer un angle (β) selon la revendication (1), caractérisé en ce que la corrélation entre l'angle (β) et les forces qui agissent sur les éléments glissants (25) de support est établie au moyen d'essais expérimentaux.

3. Procédé pour déterminer un angle (β) selon la revendication 1, caractérisé en ce que la corrélation entre l'angle (β) et les forces qui agissent sur les éléments glissants (25) de support est établie au moyen d'un modèle de calcul de l'appareil de levage.

4. Dispositif anti-oscillation pour un appareil de levage, qui comporte au moins une paire de guides (20) montée sur une structure (2, 3) de support, un chariot (23) pourvu de plusieurs éléments (25) de support qui glissent sur les guides, et un treuil (28) monté sur le chariot et auquel un câble (30) est associé pour des charges (M) en général, caractérisé en ce qu'il comporte des moyens (35) destinés à mesurer les forces qui sont provoquées par la charge déplacée (M) et qui agissent sur les éléments glissants (25) de support, lesdits moyens (35) étant placés à chacun desdits éléments glissants (25) de support et étant capables de fournir des informations portant sur la valeur des forces mesurées à un module à processeur (43) qui met en corrélation lesdites forces avec un angle (β) formé entre le câble (30) et une direction de référence prédéterminée (V), plusieurs capteurs (42) de position destinés à détecter les conditions de fonctionnement de l'appareil de levage, un bloc régulateur (45) qui traite des données qui lui sont appliquées en entrée par les capteurs (42) et par le module à processeur (43), et qui transmet des ordres de travail à des moyens d'entraînement (47) de l'appareil de levage.

5. Dispositif selon la revendication 4, caractérisé en ce que les moyens (35) destinés à mesurer les forces sont des cellules de charge.

6. Dispositif selon la revendication 5, caractérisé en ce que les éléments glissants (25) de support sont des roulements.
